(19) Europäisches Patentamt
European Patent Office
Office européen des brevets

(11) Veröffentlichungsnummer : **0 043 041**
**B1**

(12) # EUROPÄISCHE PATENTSCHRIFT

(45) Veröffentlichungstag der Patentschrift : **23.05.84**

(51) Int. Cl.³ : **C 08 F 36/18**

(21) Anmeldenummer : **81104702.6**

(22) Anmeldetag : **19.06.81**

(54) **Verfahren zur Herstellung von Polychloropren mit hohem Molekulargewicht und dessen Verwendung als Klebstoffrohstoff.**

(30) Priorität : **12.07.80 DE 3026502**
**02.07.80 DE 3025077**
**02.07.80 DE 3025076**

(43) Veröffentlichungstag der Anmeldung :
**06.01.82 Patentblatt 82/01**

(45) Bekanntmachung des Hinweises auf die Patenterteilung : **23.05.84 Patentblatt 84/21**

(84) Benannte Vertragsstaaten :
**DE FR GB**

(56) Entgegenhaltungen :
**FR-A- 2 073 106**
**US-A- 2 066 330**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Musch, Rüdiger, Dr.**
**Altenberger-Dom-Strasse 169**
**D-5060 Bergisch-Gladbach 2 (DE)**
Erfinder : **Schubart, Rüdiger, Dr.**
**An den Engelsfuhr 27**
**D-5060 Bergisch-Gladbach 2 (DE)**
Erfinder : **Hohmann, Gerhard, Dr.**
**An der Steinrütsch 35**
**D-5090 Leverkusen (DE)**
Erfinder : **Alberts, Heinrich, Dr.**
**Morgengraben 16**
**D-5000 Koeln 80 (DE)**
Erfinder : **Göbel, Wilhelm, Dr.**
**Max-Beckmann-Strasse 37**
**D-5090 Leverkusen (DE)**

**EP 0 043 041 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von hochmolekularem Poly-2-Chlorbutadien (Polychloropren) mit guten Vulkanisateigenschaften und dessen Verwendung als Klebstoffrohstoff.

Wie bereits bekannt, wird 2-Chlorbutadien (Chloropren) in alkalisch wäßriger Emulsion in Gegenwart von radikalischen Initiatoren polymerisiert. Unter dem Terminus Chloropren-Polymerisate versteht man sowohl die Homopolymerisation von Chloropren als auch die Copolymerisation mit verschiedenen Comonomeren bis zu 20 Gew.-%, bezogen auf Gesamtpolymerisat.

Gebrauchliche Comonomere sind z. B.: 1-Chlorbutadien, 2,3-Dichlorbutadien, Styrol, Isopren, Acrylnitril, Acrylester und Methacrylsäure. Durch Zusatz von schwefelhaltigen organischen Kettenübertragungsmitteln wie z. B. Mercaptanen wird das Molekulargewicht des entstandenen Polymeren gesteuert. Die Polymerisationstemperaturen — zwischen 5 und 80 °C möglich — liegen im allgemeinen bei 8-50 °C.

Bei diesen Reaktionstemperaturen wird die Polymerisation bei einem Monomerumsatz von 50-85 %, üblicherweise 60-70 %, abgebrochen. Eine weitere Polymerisation des Restmonomeren führt zwar zu hochmolekularen Produkten, die sich jedoch schlechter verarbeiten lassen und deren Produkteigenschaften nicht mehr dem hohen Niveau dieses vielseitig verwendbaren Elastomeren entsprechen. Es ist von Interesse, Chloroprenmonomeres zu hochviskosen Produkten zu polymerisieren, ohne die guten Produkteigenschaften zu verschlechtern.

Es besteht die Möglichkeit, durch eine Verringerung des Kettenüberträgers, üblicherweise Mercaptane wie n-Dodecylmercaptan (n-DDM), die mittlere Kettenlänge des Polychloroprens zu verlängern und dadurch die Polymer-Viskosität zu erhöhen. Dies ist allerdings nur in beschränktem Maße möglich. Bei einem zu geringen Reglergehalt während der Polymerisation entstehen nach der Aufarbeitung lagerinstabile Festkautschuke mit schlechten Vulkanisateigenschaften.

In der DE-OS 2 060 659 wird daher versucht, die Produkteigenschaften hochviskoser Chloropren-Polymerisate durch portionsweise Zugabe des Kettenüberträgers während der Polymerisation zu verbessern. Die Anzahl und die Höhe der Reglerzugaben sind jedoch abhängig von der Polymerisationstemperatur, dem Umwandlungsgrad und der abgestrebten Polymer-Viskosität. Die Zusätze an Regler müssen darüber hinaus bei bestimmten Monomerumsätzen erfolgen. Diese Maßnahme ist gerade bei kontinuierlich laufenden Polymerisationen aufgrund der breiten Umsatzverteilung in den Reaktionsgefäßen nicht durchführbar.

Es war daher überraschend, daß man durch Zusatz von Stoffen der allgemeinen Formel I zu Reaktionsbeginn, während oder nach der Polymerisation, spätestens jedoch vor der Entfernung des restlichen Monomeren, hochviskose Polychloroprene mit ausgezeichneten Verarbeitungsverhalten und Produkteigenschaften erhält. Die Eigenschaften treten besonders dann deutlich hervor, wenn die Stoffe der allgemeinen Formel I zu Reaktionsbeginn zugesetzt werden.

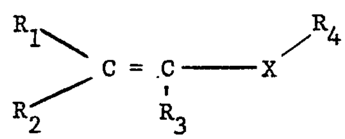

(I)

Diese Stoffe, deren Grundkörper ein zu einer Kohlenstoff-Doppelbindung α-ständiges Heteroatom enthält, werden in einer Konzentration von 0,05 bis 3 Gewichtsprozent, bezogen auf 100 Teile Ausgangsmonomer, zugesetzt.

Die Substituenten stellen folgende Reste dar:

X O, S oder $NR_5$

$R_1$ Wasserstoff, $C_1$-$C_{19}$ Alkyl, $C_2$-$C_{19}$ Alkenyl, Phenyl, $C_1$-$C_4$ Alkylenphenyl (Aralkyl), $C_5$-$C_{12}$ Cycloalkyl, $C_5$-$C_{12}$ Cycloalkenyl,

$R_2$ $C_1$-$C_{19}$ Alkyl, $C_2$-$C_{19}$ Alkenyl, Phenyl, $C_1$-$C_4$ Alkylenphenyl (Aralkyl),

$R_3$ Wasserstoff, $C_1$-$C_{19}$ Alkyl, $C_2$-$C_{19}$ Alkenyl, Phenyl, $C_1$-$C_4$ Alkylenphenyl (Aralkyl), Acryl, Formyl, Acetyl,

$R_4$ und $R_5$ gleich oder verschieden $C_1$-$C_{19}$ Alkyl, $C_2$-$C_{19}$ Alkenyl, Phenyl, $C_1$-$C_4$ Alkylenphenyl (Aralkyl), Acryl, $C_5$-$C_{12}$ Cycloalkyl, $C_5$-$C_{12}$ Cycloalkenyl. Die Reste $R_4$ und $R_5$ können auch einen Cyclus mit 4 bis 7 C-Atomen bilden, der auch Sauerstoff in Etherform enthalten kann.

Die Reste $R_1$ und $R_2$ können auch eine Alkylengruppe darstellen, wodurch die allgemeine Formel Ia entsteht. Der entstehende Ring kann aus 5 bis 12 C-Atomen bestehen.

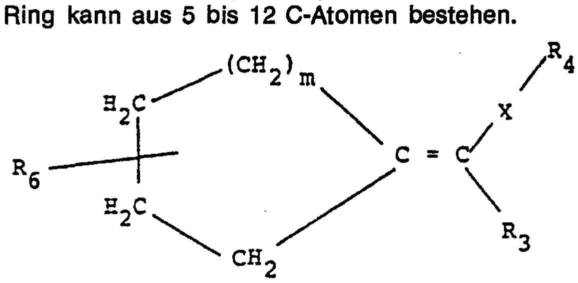

(Ia) = (2)
m = 1-8

Der Kohlenwasserstoffring der allgemeinen Formel Ia kann auch eine Doppelbindung besitzen, wodurch die allgemeine Formel Ib entsteht.

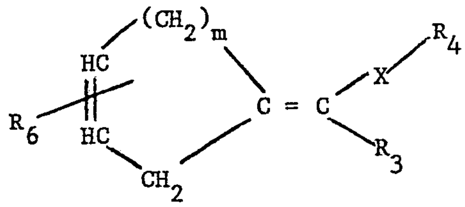

(Ib)

m = 1-8

$R_6$ stellt Wasserstoff ein $C_1$ bis $C_5$ Alkyl, oder ein $C_2$-$C_5$ Alkenyl dar.

Weiterhin können diese Ringe mit einer bis vier $CH_2$-Gruppen überbrückt sein, wodurch Verbindungen der allgemeinen Formel Ic entstehen.

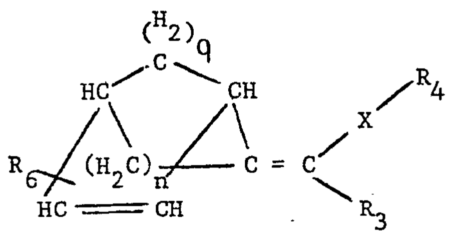

q = 1-4
n = 1-7
(Ic) = (3)

Weiterhin ist es auch möglich, daß die Reste $R_1$ und $R_4$ in der Formel I miteinander über eine $C_2$-$C_9$ Alkylenbrücke verknüpft sind und einen Heterocyclus der Formel Id bilden.

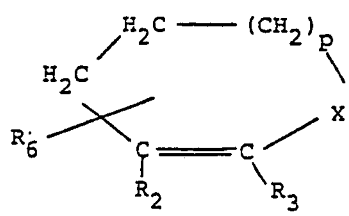

p = 0-7

(Id)

Außerdem ist es auch möglich, daß die Reste $R_1$ und $R_3$ über eine Alkylenbrücke mit 3 bis 10 C-Atomen miteinander verknüpft sind und die allgemeine Formel Ie bilden

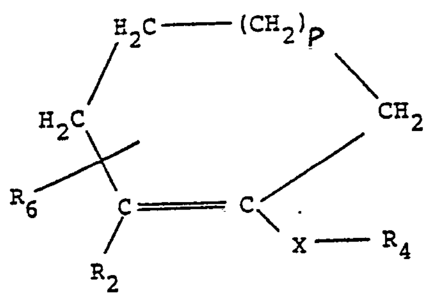

p = 0-7

(Ie)

Bei den nach den allgemeinen Formeln erhaltenen Verbindungen sollte die Summe der C-Atome die Zahl 50 nicht überschreiten.

In der allgemeinen Formel Ie können für den Fall X = $NR_5$ die Reste $R_4$ und $R_5$ auch einen Cyclus mit 4 bis 7 C-Atomen bilden, der auch Sauerstoff in Etherform enthalten kann.

Beispielhaft sind eine Reihe von Verbindungen aufgeführt, die den allgemeinen Formeln I und Ia bis Ie entsprechen. Sie werden nach den in der Literatur beschriebenen Methoden hergestellt.

Verbindungen mit X = $NR_5$ :

(W.D. Emmons, A.S. Pagano, Organic Syntheses, Collective Volume *5*, 191 (1973) R.B. Moffet, Organic Syntheses, Collective Volume *4*, 605 (1963), John Wiley ; Houben-Weyl, Band VII 1 (1954), Seite 453 und Band XI, 2 (1958), Seite 74 Thieme Verlag, Stuttgart).

N-Isobutenylpiperidin
N-Isobutenyl-morpholin
N-Isobutenyl-diäthylamin
N-Isobutenyl-dipropylamin
N-Isobutenyl-diisobutylamin
N-Isobutenyl-diisobutylamin
N-Isobutenyl-perhydroazepin
N-(Cyclohexylidenmethyl)-morpholin
N-(Cyclohexylidenmethyl)-dibutylamin
N-(Cyclohexylidenmethyl)-diethylamin
N-(Cyclohexyliden-ethyl)-piperidin
N-(3-Cyclohexenylidenmethyl)-piperidin
N-(Bicyclo [2,2,1]-hepten-5-ylidenmethyl-2)-piperidin
N-(3-Cyclohexenylidenmethyl)-morpholin
N-(Bicyclo [2,2,1]-hepten-5-ylidenmethyl-2)-perhydroazepin
N-(3-Cyclohexenylidenmethyl)-pyrrolidin
N-(Bicyclo [2,3,1]-hepten-5-ylidenmethyl-2)-dibutylamin
N-(3-Cyclohexenylidenmethyl)-perhydroazepin
N-(Bicyclo [2,2,1]-hepten-5-ylidenmethyl-2)-dipropylamin
N-(3 bzw. 4 bzw. 5-Methyl-3-cyclohexenylidenmethyl)-dibutylamin
N-Ethyl-3-Methyl-aza-cyclohexen-2
N-(3-Methyl-3-Cyclohexenylidenmethyl)-dipropylamin
N-(3-Cyclohexenylidenmethyl)-chlorethylamin
N-Methyl-2-methyl-aza-cyclohexen
N-(3-Cyclohexenylidenmethyl)-dimethylamin
N-(Cyclohexenyl)-piperidin
N-(2-Methyl-cyclohexenyl)-piperidin
N-(2-Methyl-cyclohexenyl)-morpholin
N-(3-Methyl-cyclohexenyl)-piperidin

Diese Enamine stehen mit den entsprechenden Schiff-Basen in einem tautomeren Gleichgewicht,

N-Cyclohexenyl-cyclohexylamin
N-(2-Methyl-Cyclohexenyl)-cyclohexylamin
N-(3-Methyl-cyclohexenyl)-cyclohexylamin
N-(3,5,5-Trimethyl-cyclohexenyl)-cyclohexylamin
N-Cyclohexenyl-(2-ethyl-hexylamin)
N-Cyclohexenyl-dicylamin

Verbindungen mit X = O oder S :
(DE-OS 28 37 026)
(2-Methyl-buten-4)-n-decylether
(1,2-Dimethyl-buten)-methylether
(1,2-Dimethyl-buten)-ethylether
(1,2-Dimethyl-buten)-propylether
(1,2-Dimethyl-buten)-butylether
(1,2-Dimethyl-buten)-pentylether
(1,2-Dimethyl-buten)-stearylether
2-Methyl-propen-benzylether
2-Methyl-propen-(o,m,p)-methyl-benzylether
2-Methyl-propen-(o,m,p)-ethyl-benzylether
2-Methyl-propen-ethyl-thioether
2-Methyl-propen-dodecyl-thioether
2-Methyl-propen-(tert.-dodecyl-thio-ether)
2-Methyl-propen-phenyl-thio-ether
2-Methyl-propen-(4-tert.-butyl-phenyl-thio-ether)
2-Methyl-propen-cyclohexyl-ether
Bis-(2-methyl-propen)-ethylen-diether
Bis-(2-methylpropen)-butylen-1,4-diether
Bis-(2-methylpropen)-hexylen-1,6-diether
[Cyclohexyl-ylidenmethyl]-cyclohexyl-ether
[Cyclohexyl-ylidenmethyl]-butylether
[Cyclohexyl-ylidenmethyl]-benzylthioether
[Cyclohexyl-ylidenmethyl]-dodecylthioether
[3 bzw, 4 bzw. 5-Methylcyclohexyl-ylidenmethyl]-butylthioether

[3 bzw. 4 bzw. 5-Methylcyclohexyl-ylidenmethyl (-benzylether)
[Cyclohexyl-ylidenmethyl]-propyl-ether
[2-Cyclohexyl-yliden-ethyl]-2-ethyl-benzylether
Cyclohexyl-ylidenmethyl-octadecyl-ether
[3 bzw. 4 bzw. 5-Methyl-cyclohexen-3-ylidenmethyl]-butyl-ether
[3 bzw. 4 bzw. 5 bzw. 2-Methyl-3-cyclohexen-ylidenmethyl]-hexyl-ether
[2 bzw. 3 bzw. 4 bzw. 5-Methyl-3-cyclohexen-ylidenmethyl]-octylether
[4-Methyl-cyclohexen-3-ylidenmethyl]-butyl-ether
[3-Methylcyclohexen-ylidenmethyl]-benzyl-ether
[Cyclohexen-(3)-ylidenmethyl]-cyclohexyl-ether
[Cyclohexen-(3)-ylidenmethyl]-benzyl-ether
[Cyclohexen-(3)-ylidenmethyl]-propyl-ether
[Cyclohexen-(3)-ylidenmethyl]-butyl-ether
[Cyclohexen-(3)-ylidenmethyl]-pentylthioether
[Cyclohexen-(3)-ylidenmethyl]-decyl-ether
[Cyclohexen-(3)-ylidenmethyl]-pentadecyl-ether
[Cyclohexen-(3)-ylidenmethyl]-octadecyl-ether
[2,5-Endomethylen-cyclohexen-(3)-ylidenmethyl]-cyclohexyl-ether
[2,5-Endomethylen-cyclohexen-(3)-ylidenmethyl]-hexylether
[2,5-Endomethylen-cyclohexen-(3)-ylidenmethyl]-benzylether
[2,5-Endomethylen-cyclohexen-(3)-ylidenmethyl]-2-ethylexyl-ether
[2,5-Endomethylen-cyclohexen-(3)-ylidenmethyl]-3,4,5-trimethylhexylthioether
[2,5-Endomethylen-cyclohexen-(3)-ethyliden]-cyclohexyl-ether
(2-Methyl-cyclohexenyl)-octyl-ether
(2-Methyl-cyclohexenyl)-benzyl-ether
2-Acetyl-oxa-cyclohexen-(2)
2-Formyl-oxa-cyclohexen-(2)
2-Acetyl-3-methyl-oxa-cyclohexen-(2)
Cyclohexenyl-n-butyl-ether
2-Methyl-cyclohexenyl-n-butyl-ether
2-Methyl-cyclohexenyl-n-propyl-ether

Als besonders wirksam zeigen sich Verbindungen der allgemeinen Formel Ie. Ganz besonders deutlich treten die Effekte bei Zusatz von Verbindungen der allgemeinen Formel Ib und Ic hervor.

Diese Stoffe werden vorzugsweise vor Reaktionsbeginn oder bis zu einem Monomerumsatz von 40 % in Mengen von 0,05 bis 3,0 Gewichtsprozent, bevorzugt 0,1 bis 1,5 Gewichtsprozent zugesetzt. Das so erhaltene Polymere im Mooney-Viskositätsbereich von 80-200 ME, wobei der Mooney-Bereich von 130-170 ME besonders günstig ist, zeichnet sich durch eine hohe Stabilität gegenüber thermischer Belastung aus. Eine solch merkliche thermische Belastung tritt z. B. bei der Trocknung des koagulierten Latex auf dem Trockner mit Hilfe von IR-Strahlung und/oder Heißluft auf. Das verbesserte Verarbeitungsverhalten macht sich besonders in einer wesentlich schnelleren Walzfellbildung bemerkbar. Die vulkanisierten Polymere zeichnen sich durch ein höheres Festigkeitsniveau aus.

Die vorteilhafte Beeinflussung der Polymereigenschaften wird besonders bei Polychloroprenen sichtbar, die bei der Fertigung von Klebstofffen eingesetzt werden. Gerade hochviskose Klebstoffe deren Lagerinstabilität zu einer erheblichen Beeinträchtigung der Verarbeitbarkeit führt, zeigen durch Zusatz von Stoffen der allgemeinen Formel I ein hervorragendes Lagerverhalten und wesentlich verbesserte Topfzeiten.

Die Polymerisation wird in wäßrig-alkalischer Emulsion in Anwesenheit radikalischer Initiatoren durchgeführt. Als geeignete Emulgatorsysteme werden Alkalisalze wasserlöslicher gesättigter oder ungesättigter Monocarbonsäuren eingesetzt, z. B. disproportionierte Resinsäuren, gegebenenfalls im Gemisch mit Fettsäuren wie Ölsäure, Kokosfettsäure. Die Emulgatoren werden in Mengen von 2-10 Gew.-Teilen (bevorzugt 3-5 Gew.-Teile), bezogen auf 100 Teile Monomer zugesetzt.

Auch Kondensationsprodukte aus Naphthalinsulfonsäure und Formaldehyd werden als zusätzliche Emulgatoren eingesetzt. Hier hat es sich gezeigt, daß es günstig ist, 0,4-1,5 Teile dieser oberflächenaktiven Verbindungen vom Sulfat- oder Sulfonattyp pro 100 Gew.-Teile Monomer zuzusetzen.

Zur Regelung des Molekulargewichtes werden Kettenüberträger wie Alkylmercaptane oder Dialkylxanthogendisulfide zugesetzt. Der Anteil des eingesetzten Mercaptans, z. B. Dodecylmercaptan, beeinflußt das Molekulargewicht des entstehenden Polymeren. Mit steigendem Anteil an Mercaptan verringert sich das mittlere Molekulargewicht des Polymeren, sichtbar an der sinkenden Mooney-Viskosität der Produkte.

Das Reaktionsprodukt besitzt dann einen für die Weiterverarbeitung günstigen Mooney-Bereich, wenn das Mercaptan in Mengen von 0,1-0,3 Gew.-Teilen pro 100 Teile Monomer zugesetzt wird.

Die zur Erreichung einer gewünschten Polymerviskosität nötigen Mengen an Kettenüberträgern lassen sich vom Fachmann leicht ermitteln.

Verwendet man das oben beschriebene Emulgatorsystem, ist ein pH-Wert der Emulsion größer als 10

erforderlich. Er sollte vorzugsweise bei pH 12-13,5 liegen.

Die Polymerisation wird durch Zugabe bekannter Polymerisationsinitiatoren gestartet und durchgeführt. Als Initiatoren kommen Radikale erzeugende Verbindungen in Frage, wie z. B. : Alkalipersulfate, Wasserstoffperoxyd und organische Peroxyde wie Cumolhydroperoxyd oder Benzoylperoxyd. Es ist ferner möglich, die Polymerisation durch Zugabe von Reduktionsmitteln, wie Formamidinsulfinsäure zu initiieren. Die Temperaturführung während der Polymerisation kann zwischen 0 und 60 °C variieren, wobei sich der Bereich von 5-45 °C als günstig erwiesen hat. Inhibitoren wie Phenothiazin beenden die Polymerisation nach einem Monomerumsatz von 50-96 %, wobei es vorteilhaft ist, die Polymerisation nach einem Monomerumsatz von 70-90 % abzubrechen.

Das restliche, nicht umgesetzte Monomere kann durch Wasserdampfdestillation entfernt werden. Der pH des alkalischen Latex wird durch verdünnte Essigsäure auf pH 5-7 gesenkt und das Polymere aus dieser Emulsion, beispielsweise durch Gefrierkoagulation, isoliert und getrocknet, wie z. B. beschrieben in : Chem. Engng. Progr. 43, 391 (1974) und in der deutschen Patentschrift 1 051 506. Für die Aufarbeitung eignen sich aber auch andere herkömmliche Methoden, wie z. B. in der deutschen Patentschrift 1 111 804 beschrieben.

Für die Herstellung von Klebstoffen wird das Polychloropren in organischen Lösungsmitteln wie Benzol, Toluol, Methylenchlorid oder Trichlorethylen bzw. in Gemischen dieser Lösungsmittel mit anderen Lösungsmitteln, die Polychloropren allein nicht lösen, wie Benzin, Cyclohexan oder Methylacetat, gelöst.

Die Viskosität der Lösung richtet sich nach dem Verwendungszweck und liegt vorzugsweise bei 10-100 Poise, gemessen bei 20 °C mit einem Brookfield LVT-Viskosimeter.

Weitere Methoden, Polychloroprenklebstoffe herzustellen, werden in der DE-AS 1 200 988 beschrieben.

Die folgenden Beispiele erläutern die Erfindung :

### Beispiel 1 (Vergleichsbeispiel)

Man löst in 120 kg Wasser 3,5 kg des Natriumsalzes einer disproportionierten Resinsäure, 0,5 kg des Natriumsalzes eines Naphthalinsulfonsäure/Formaldehyd-Kondensationsproduktes und 0,6 kg Natriumhydroxyd auf. In dieser Lösung emulgiert man 90 kg Chloropren und 0,126 kg n-Dodecylmercaptan. Der Ansatz wird mit Stickstoff gespült, auf + 45 °C erwärmt und die Polymerisation durch kontinuierliche Zugabe von 3 %iger wäßriger Formamidinsulfinsäure durchgeführt.

Die Polymerisationstemperatur wird auf + 45 °C gehalten. Bei einem Monomerumsatz von 66 % wird die Reaktion durch Zugabe von 90 g Phenothiazin abgebrochen. Das restliche Monomere wird durch Wasserdampfdestillation aus dem Polymeren entfernt und der Polymerlatex nach Senken des pH-Wertes auf 7,0 auf einer Kühlwalze ausgefroren und isoliert. Der Mooney-Wert des Polymeren liegt bei ML-4′ = 105 ME. Das in Beispiel 1 geschilderte Polymerisationsverfahren liegt außerhalb des Bereiches der Erfindung.

### Beispiele 2-6

Es wird wie in Beispiel 1 verfahren, nur werden unterschiedliche Mengen an n-Dodecylmercaptan (n-DDM) und in Beispiel 2, 4, 6 zusätzlich die Substanz A zu Reaktionsbeginn zugesetzt.

Die Konzentrationen dieses eingesetzten Stoffes und die Mooney-Viskositäten der Polymerproben sind Tabelle 1 zu entnehmen.

Die Polymeren der Beispiele 1-6 werden anschließend mit folgenden Komponenten auf der Walze in üblicher Weise gemischt :

Rezeptur

| | | |
|---|---|---|
| Polychloropen | 100 | Gew.-Teile |
| inaktiver Ruß | 48 | Gew.-Teile |
| Weichmacher | 25 | Gew.-Teile |
| Stearinsäure | 0,5 | Gew.-Teile |
| Phenyl-β-naphthylamin | 2,0 | Gew.-Teile |
| Magnesiumoxyd | 4,0 | Gew.-Teile |
| Zinkoxyd | 5,0 | Gew.-Teile |
| Ethylenthioharnstoff | 0,75 | Gew.-Teile |
| Tetramethylthiuramdisulfid | 0,9 | Gew.-Teile |

Die Vulkanisation erfolgt 30 Minuten bei 150 °C. Das Eigenschaftsbild der so erhaltenen Vulkanisate zeigt Tabelle 1. Wie man sieht, steigen die Vulkanisatfestigkeiten gerade dann markant an, wenn während der Polymerisation Stoffe der allgemeinen Formel I anwesend sind, erläutert am Beispiel der Substanz A.

Tabelle 1

| Beispiel Nr. | 1[1)] | 2 | 3[1)] | 4 | 5[1)] | 6 |
|---|---|---|---|---|---|---|
| Reglermenge (Teile) | 0,14 | 0,14 | 0,11 | 0,11 | 0,11 | 0,11 |
| Zusatz von Substanz A | - | 0,8 | - | 0,5 | - | 0,5 |
| Monomerumsatz (%) | 66 | 70 | 69 | 69 | 88 | 90 |
| Mooney-Viskosität (100°C) ME | 105 | 108 | 148 | 142 | 152 | 150 |
| Zerreißfestigkeit ($kp/m^2$) | 125 | 130 | 110 | 128 | 105 | 121 |
| Bruchdehnung (%) | 475 | 520 | 460 | 540 | 390 | 510 |
| Modul, 300 % Dehnung ($kp/m^2$) | 70 | 74 | 70 | 74 | 69 | 74 |
| Shore-Härte A bei RT | 50 | 51 | 51 | 51 | 50 | 51 |
| Elastizität (%) | 49 | 51 | 50 | 51 | 49 | 50 |

Substanz A : N-(3-cyclohexenylidenmethyl)-dibutylamin
[1)] = Vergleichsbeispiele

Aus Tabelle 1 geht hervor, daß alle Vulkanisate der erfindungsgemäß hergestellten Polymeren (Nr. 2, 4, 6 Tabelle 1) auch bei hohem Monomerumsatz deutlich höhere Zerreißfestigkeit und höhere Dehnungen aufweisen als Vulkanisate von entsprechenden, nach der konventionellen Methode hergestellte Polymere.

Beispiel 7 (Vergleichsbeispiel)

Für die Herstellung von Polychloropren-Klebstoff wurde eine Mischung folgender Zusammensetzung unter Stickstoffatmosphäre polymerisiert :

| | |
|---|---|
| Chloropren | 100,0 Gew.-Teile |
| n-Dodecylmercaptan | 0,1 Gew.-Teile |
| entsalztes Wasser | 140,0 Gew.-Teile |
| Natriumsalz einer disproportionierten Abietinsäure | 6,0 Gew.-Teile |
| Natriumsalz eines Naphthalinsulfonsäure/Formaldehyd-Kondensationsproduktes | 0,7 Gew.-Teile |
| Natronlauge (100 %) | 0,6 Gew.-Teile |
| Kaliumperoxiddisulfat | 0,1 Gew.-Teile |

Die Polymerisation erfolgt bei + 10 °C bei kontinuierlichem Zulauf von 2 %iger wäßriger Formamidinsulfinsäure. Bei einem Monomerumsatz von 71 % wird die Reaktion unter Zugabe von 0,1 Teil Phenothiazin abgebrochen. Die Aufarbeitung erfolgt wie in Beispiel 1 beschrieben. Der Mooney-Wert des Polymeren liegt bei ML-4' = 128 ME.

Beispiel 8

Es wird wie in Beispiel 7 verfahren, nur wird dem mit Restmonomer beladenen Polymerlatex vor der Entspannung und Aufarbeitung im Trockner 0,5 Gew.-Teile der Substanz A zugesetzt. Die Polymerisation wird bei einem Monomerumsatz von 69 % abgebrochen. Die Mooney-Viskosität des aufgearbeiteten Polymeren liegt bei ML-4' = 126 ME.

Beispiel 9

Es wird wie im Beispiel 7 verfahren, nur werden 0,5 Teile der Substanz A während der Polymerisation bei einem Monomerumsatz von 40 % zugegeben. Der Abbruch der Polymerisation erfolgt bei 70 % Monomerumsatz. Die Mooney-Viskosität des Polymeren liegt bei ML-4' = 128 ME.

Beispiel 10

Es wird wie im Beispiel 7 verfahren, nur werden 0,5 Teile der Substanz A vor Beginn der Polymerisation der Mischung zugesetzt. Die Polymerisation wird bei einem Monomerumsatz von 70 % abgebrochen. Die Mooney-Viskosität des Polymeren liegt bei ML-4' = 124 ME.

Beispiel 11 (Vergleichsbeispiel)

Es wird wie im Beispiel 7 verfahren, nur wird der Molekulargewichtsregler n-Dodecylmercaptan von 0,1 auf 0,08 Gewichtsteile gesenkt. Der Abbruch der Polymerisation erfolgt bei 68 % Monomerumsatz. Die Mooney-Viskosität des Polymeren liegt bei ML-4' = ⩾ 200 ME.

Beispiel 12

Man verfährt wie im Beispiel 11, nur werden bei 45 % Monomerumsatz 0,2 Gew.-Teile der Substanz A zugesetzt. Der Abbruch der Polymerisation erfolgt bei 66 % Monomerumsatz. Die Mooney-Viskosität des Polymeren liegt bei ML-4' = 159 ME.

Beispiel 13 (Vergleichsbeispiel)

Für die Bestimmung der Lösungsviskosität wurden 170 g des in den Beispielen 7 bis 12 hergestellten Polychloroprens in 830 g eines Lösungsmittelgemisches aus Ethylacetat, Benzin 65/95, Toluol (Gewichtsverhältnis 2 : 2 : 1) unter Rühren mit einem Laborrührer mit 600 UpM gelöst. Die so erhaltenen Klebstoffe wurden auf eine Viskosität von 3 Pas, gemessen bei 20 °C mit einem Brookfield LVT-Viskosimeter (Spindel 4, 30 UpM), durch Zugabe weiterer Mengen des gleichen Lösungsmittelgemisches verdünnt und in verschlossenen Gebinden bei 20 °C und 65 % relativer Luftfeuchtigkeit gelagert. Nach 6-monatiger Lagerung wurde ihre Viskosität erneut bestimmt.

| Polychloropren nach Beispiel | Lösungsviskosität (Pa s)[+] sofort | nach 6-monatiger Lagerung |
|---|---|---|
| 7[1] | 3,0 | 9,0 |
| 8 | 3,0 | 4,4 |
| 9 | 3,0 | 3,4 |
| 10 | 3,0 | 3,0 |
| 11[1] | 3,0 | 14,0 |
| 12 | 3,0 | 6,0 |

[+]) gemessen bei 20 °C mit einem Brookfield LVT-Viskosimeter (Spindel 4 30 UpM)
[1]) Vergleichsbeispiele

## Beispiel 14 (Topfzeit)

[1]) 20 %ige Lösung von Thiophosphorsäure-tris-)p-isocyanatophenylester) in Methylenchlorid

25 g des in den Beispielen 7 bis 12 hergestellten Polychloroprens wurden in 125 g eines Lösungsmittelgemisches auf Ethylacetat, Benzin 65/95, Toluol (Gewichtsverhältnis 2 : 2 : 1) unter Rühren mit einem Laborrührer mit 600 UpM gelöst. Die so erhaltenen Klebstoffe wurden auf eine Viskosität von 1,5 Pas, gemessen bei 20 °C mit einem Brookfield LVT-Viskosimeter (Spindel 4, 30 UpM), durch Zugabe weiterer Mengen des gleichen Lösungsmittelgemisches verdünnt. In dieser Lösung wurden 7,5 g Desmodur RF[1]) gut eingemischt und die Viskosität dieser Klebstoffmischung mit einem Brookfield LVT-Viskosimeter, Spindel 4 bei 60 UpM, in 30 Sekunden bestimmt. Die Flasche wurde darauf bei 20 °C und 65 % relativer Luftfeuchtigkeit gelagert und der Viskositätsanstieg der Mischung durch stündliches Messen mit dem Brookfield LVT-Viskosimeter ermittelt, bis ein Anstieg der Ausgangsviskosität um 50 % erreicht wurde.

| Polychloropren nach Beispiel | Lösungsviskosität (Pa s)[+] sofort | Viskositätsanstieg über 50 % nach (h) |
|---|---|---|
| 7[++] | 1,2 | 20 |
| 8 | 1,2 | 36 |
| 9 | 1,2 | 45 |
| 10 | 1,2 | 48 |
| 11[++] | 1,2 | 16 |
| 12 | 1,2 | 35 |

[+]) gemessen bei 20 °C mit einem Brookfield LVT-Viskosimeter (Spindel 4, 30 UpM)
[++]) Vergleichsbeispiele

## Beispiel 15 (Walzfellbildung auf der Berstorf-Walze)

Die Walzfellbildung wurde auf der Berstorf-Walze mit 1,50 m langen Walzen bei einer Fabrikation von 1 : 1,10 geprüft.

25 kg des in den Beispielen 7 bis 12 hergestellten Polychloroprens wurden auf gekühlten Walzen bei einem Walzenspalt von 1 mm zunächst zweimal eng durchgelassen. Anschließend wurde bei 2 mm breitem Walzspalt die Zeit bestimmt, nach der sich auf den laufenden Walzen ein geschlossenes Fell gebildet hatte.

| Polychloropren nach Beispiel | Walzfellbildungszeit (min) |
|---|---|
| 7[1] | 8 |
| 8 | 3 |
| 9 | 3 |
| 10 | 3 |
| 11[1] | 9 |
| 12 | 4 |

[1]) Vergleichsbeispiele

Die Beispiele zeigen deutlich, daß die erfindungsgemäß hergestellten Polymere (Beispiele 8-10, 12) gegenüber den Polymerisaten, die nach der üblichen Vorschrift hergestellt worden sind (Beispiele 7, 11), ein ausgezeichnetes Lagerverhalten in Lösung besitzen (Beispiele 13, 14). Überraschend war auch die kurze Walzfellbildungszeit bei den Polymeren, die in Gegenwart von Substanz A (Tabelle 1) polymerisiert worden sind (Beispiel 15). Dieser Äther steht beispielhaft für die beanspruchten Substanzen der allgemeinen Formel I.

Beispiele 16-20 (Lösungsviskosität)

Man verfährt wie im Beispiel 10, nur wird die Substanz A durch die Stoffe B-F ersetzt, die beispielhaft für die in den allgemeinen Formeln Ia-Ie angegebenen Verbindungen stehen. Sie haben folgende Struktur :

B = N-(Cyclohexylidenmethyl)-dibutylamin
C = N-Cyclohexenyl (2-Ethyl-hexyl)-amin
D = N-(3-Cyclohexenylidenmethyl)-methyl-phenyl-amin
E = N-(Bicyclo [2,2,1]-hepten-5-ylidenmethyl-2)piperidin
F = N-Ethyl-3-Methyl-aza-cyclohexen-2

Die wesentlich verbesserten Produkteigenschaften sollen durch Bestimmung der Lösungsviskosität beispielhaft erläutert werden. Die Herstellung der Klebstoffmischungen aus Beispiel 16-20 erfolgt nach Beispiel 13. Man erhält folgende Lösungsviskositäten.

| Polychloropren nach Beispiel | Substanz | Lösungsviskosität (Pa s) sofort | Lösungsviskosität (Pa s) nach 6-monatiger Lagerung |
|---|---|---|---|
| 16 | B | 3,0 | 3,5 |
| 17 | C | 3,0 | 3,8 |
| 18 | D | 3,0 | 3,0 |
| 19 | E | 3,0 | 3,1 |
| 20 | F | 3,0 | 3,4 |

Wie man sieht, zeigen auch Polymere, die in Gegenwart von Stoffen der Struktur B-F hergestellt worden sind, ein deutlich verbessertes Lagerverhalten als Polymeres das nach dem üblichen Polymerisationsverfahren hergestellt worden ist (Beispiel 7 in Beispiel 13).

Beispiel 21-25

Es wird wie in Beispiel 1 verfahren, nur werden unterschiedliche Mengen an n-Dodecylmercaptan (n-DDM) und in Beispiel 21, 23, 25 zusätzlich die Substanz G zu Reaktionsbeginn zugesetzt.

Die Konzentrationen dieses eingesetzten Stoffes und die Mooney-Viskositäten der Polymerproben sind Tabelle 2 zu entnehmen.

Die Polymeren der Beispiele 21-25 werden anschließend mit folgenden Komponenten auf der Walze in üblicher Weise gemischt:

Rezeptur

| | |
|---|---|
| Polychloropren | 100 Gew.-Teile |
| inaktiver Ruß | 48 Gew.-Teile |
| Weichmacher | 25 Gew.-Teile |
| Stearinsäure | 0,5 Gew.-Teile |
| Phenyl-β-naphthylamin | 2,0 Gew.-Teile |
| Magnesiumoxyd | 4,0 Gew.-Teile |
| Zinkoxyd | 5,0 Gew.-Teile |
| Ethylenthioharnstoff | 0,75 Gew.-Teile |
| Tetramethylthiuramdisulfid | 0,9 Gew.-Teile |

Die Vulkanisation erfolgt 30 Minuten bei 150 °C. Das Eigenschaftsbild der so erhaltenen Vulkanisate zeigt Tabelle 2. Wie man sieht, steigen die Vulkanisatfestigkeiten gerade dann markant an, wenn während der Polymerisation Stoffe der allgemeinen Formel I anwesend sind, erläutert am Beispiel der Substanz G.

Tabelle 2

| Beispiel-Nr. | 1[1)] | 21 | 22[1)] | 23 | 24[1)] | 25 |
|---|---|---|---|---|---|---|
| Reglermenge (Teile) | 0,14 | 0,14 | 0,11 | 0,11 | 0,11 | 0,11 |
| Zusatz von Substanz G | - | 0,6 | - | 0,4 | - | 0,4 |
| Monomerumsatz (%) | 68 | 69 | 67 | 69 | 88 | 89 |
| Mooney-Viskosität (100°C) ME | 110 | 108 | 142 | 138 | 152 | 146 |
| Zerreißfestigkeit (MPa) | 12,1 | 13,4 | 11,2 | 12,8 | 10,8 | 12,8 |
| Bruchdehnung (%) | 480 | 520 | 460 | 510 | 430 | 500 |
| Modul, 300 % Dehnung (MPa) | 5,0 | 5,1 | 5,1 | 5,1 | 5,0 | 5,1 |
| Elastizität (%) | 49 | 51 | 50 | 51 | 49 | 50 |

[1)] = Vergleichsbeispiel

Substanz G = [Cyclohexen-(3)-ylidenmethyl]-benzyl-ether

Aus Tabelle 2 geht hervor, daß alle Vulkanisate der erfindungsgemäß hergestellten Polymeren (Nr. 21, 23, 25-Tabelle 2 auch bei hohem Monomerumsatz deutlich höhere Zerreißfestigkeiten und höhere Dehnungen aufweisen als Vulkanisate von entsprechenden, nach der konventionellen Methode hergestellten Polymeren.

## Beispiel 26

Es wird wie im Beispiel 1 verfahren, nur werden in dem vom Restmonomeren befreiten Polymerlatex vor der Koagulation und Aufarbeitung am Trockner 0,4 Gew.-Teile der Substanz G zugesetzt. Die Polymerisation wird bei einem Monomerumsatz von 66 % abgebrochen. Die Mooney-Viskosität des aufgearbeiteten Polymeren liegt bei ML-4′ = 108 ME.

## Beispiel 27

Es wird wie im Beispiel 1 verfahren, nur werden 0,4 Teile der Substanz G während der Polymerisation bei einem Monomerumsatz von 40 % zugegeben. Der Abbruch der Polymerisation erfolgt bei 70 % Monomerumsatz. Die Mooney-Viskosität des Polymeren liegt bei ML-4′ = 112 ME.

## Beispiel 28

Es wird wie im Beispiel 1 verfahren, nur werden 0,4 Teile der Substanz G vor Beginn der Polymerisation der Mischung zugesetzt. Die Polymerisation wird bei einem Monomerumsatz von 71 % abgebrochen. Die Mooney-Viskosität des Polymeren liegt bei ML-4′ = 108 ME.

Beispiel 29 (Vergleichsbeispiel)

Es wird wie im Beispiel 1 verfahren, nur wird der Molekulargewichtsregler n-Dodecylmercaptan von 0,14 auf 0,08 Gew.-Teile gesenkt. Der Abbruch der Polymerisation erfolgt bei 67 % Monomerumsatz. Die Mooney-Viskosität des Polymeren liegt bei ML-4' = > 200 ME.

Beispiel 30

Man verfährt wie im Beispiel 29, nur werden zu Reaktionsbeginn 0,2 Gew.-Teile der Substanz G zugesetzt. Der Abbruch der Polymerisation erfolgt bei 70 % Monomerumsatz. Die Mooney-Viskosität des Polymeren liegt bei ML-4' = 160 ME.

Die Vulkanisation der Kautschuke wird, wie im Beispiel 21-25 beschrieben, durchgeführt. Der Einfluß der beanspruchten Substanzen auf die Produkteigenschaften soll an den Vulkanisatfestigkeiten beispielhaft erläutert werden (vergleiche Tabelle 3). Wie man sieht, wird der Effekt besonders dann deutlich, wenn die beanspruchten Substanzen vor oder während der Polymerisation zugesetzt werden.

Tabelle 3

| Beispiel-Nr. | | 26 | 27 | 28 | 29 [1] | 30 |
|---|---|---|---|---|---|---|
| Substanz G | Menge (Teile) | 0,4 | 0,4 | 0,4 | 0 | 0,2 |
| | Zusatz | nach d. Polym. | bei 40 % Umsatz | zu R. Beginn | - | zu R.-Beginn |
| Umsatz (%) | | 66 | 70 | 71 | 67 | 70 |
| Mooney-Viskosität (100°C) ME | | 108 | 112 | 108 | 200 | 160 |
| Zerreißfestigkeit (MPa) | | 12,8 | 13,1 | 13,3 | 8,4 | 12,8 |

[1]) = Vergleichsbeispiel

Beispiel 31 (Walzfellbildung auf der Berstorf-Walze)

Die Walzfellbildung wurde auf der Berstorf-Walze mit 1,50 m langen Walzen bei einer Fabrikation von 1 : 1,10 geprüft.

25 kg des in den Beispielen 1, 21, 24, 25, 29, 30 hergestellten Polychloroprens wurden auf gekühlten Walzen bei einem Walzenspalt von 1 mm zunächst zweimal eng durchgelassen. Anschließend wurde bei 2 mm breitem Walzspalt die Zeit bestimmt, nach der sich auf den laufenden Walzen ein geschlossenes Fell gebildet hatte.

| Polychloropren nach Beispiel | Walzfellbildungszeit (min) |
|---|---|
| 1 [1]) | 5 |
| 21 | 2 |
| 24 [1]) | 7 |
| 25 | 2 |
| 29 [1]) | 12 |
| 30 | 5 |

[1]) = Vergleichsbeispiel

Die Beispiele zeigen deutlich, daß die erfindungsgemäß hergestellten Polymere (Beispiele 21, 25, 30) gegenüber den Polymerisaten, die nach der üblichen Vorschrift hergestellt worden sind (Beispiele 1, 24, 29), kurze Walzfellbildungszeiten besitzen.

### Beispiele 32-36

Man verfährt wie in Beispiel 1, nur werden in Beispiel 32-35 zusätzlich die Substanzen H-K in Konzentrationen von 0,5 Gew.-% zu Reaktionsbeginn zugesetzt. Die Mooney-Viskositäten der Polymeren sind Tabelle 4 zu entnehmen.

Tabelle 4

| Beispiel Nr. | 32 | 33 | 34 | 35 | 36 [1] |
|---|---|---|---|---|---|
| Reglermenge (Teile) | 0,1 | 0,1 | 0,1 | 0,1 | 0,1 |
| Zusatz von Substanz | H | I | J | K | - |
| Monomerumsatz (%) | 80 | 81 | 80 | 82 | 82 |
| Mooney-Viskosität 100 C (ME) | 145 | 148 | 144 | 152 | 158 |

[1]) = Vergleichsbeispiel

H = Cyclohexenyl-octyl-ether
I = (Cyclohexen-3-ylidenmethyl) pentyl ether
J = (2,5-Endomethylen-cyclohexen-3-ylidenmethyl) cyclohexylether
K = 2-Acetyl-oxa-cyclohexen-2

### Beispiel 37 (Verarbeitung auf der Walze)

Von den nach Beispiel 32-36 hergestellten Polymeren wird gemäß ISO 2575 eine Rußmischung hergestellt und deren Defohärte und Mischungsviskosität gemessen. Die Werte sind in Tabelle 5 zusammengefaßt.

Tabelle 5

| Beispiel-Nr. | 32 | 33 | 34 | 35 | 36 [1] |
|---|---|---|---|---|---|
| Defohärte (80 C) (N) | 21,0 | 19,5 | 19,5 | 21,0 | 25,5 |
| Mooneyviskosität (ME) | 132 | 122 | 120 | 135 | 142 |
| Defo-Mooney-Relation | 16 | 16 | 16,3 | 15,6 | 18 |

[1]) = Vergleichsbeispiel

Wie die Beispiele 32-35 zeigen, besitzen die erfindungsgemäß hergestellten Polymeren nach der Verarbeitung niedrigere Defohärten und Defo-Mooney-Relationen, was besagt, daß sie auf der Walze ein wesentlich günstigeres Verarbeitungsverhalten zeigen.

### Beispiel 38

Es wird wie im Beispiel 7 verfahren, nur wird in dem vom Restmonomer befreiten Polymerlatex vor der Koagulation und Aufarbeitung am Trockner 0,4 Gew.-Teile der Substanz G zugesetzt. Die Polymerisation wird bei einem Monomerumsatz von 69 % abgebrochen. Die Mooney-Viskosität des aufgearbeiteten Polymeren liegt bei ML-4' = 124 ME.

Beispiel 39

Es wird wie im Beispiel 7 verfahren, nur werden 0,4 Teile der Substanz G während der Polymerisation bei einem Monomerumsatz von 40 % zugegeben. Der Abbruch der Polymerisation erfolgt bei 70 % Monomerumsatz. Die Mooney-Viskosität des Polymeren liegt bei ML-4' = 125 ME.

Beispiel 40

Es wird wie im Beispiel 7 verfahren, nur werden 0,4 Teile der Substanz G vor Beginn der Polymerisation der Mischung zugesetzt. Die Polymerisation wird bei einem Monomerumsatz von 71 % abgebrochen. Die Mooney-Viskosität des Polymeren liegt bei ML-4' = 122 ME.

Beispiel 41 (Vergleichsbeispiel)

Es wird wie im Beispiel 7 verfahren, nur wird der Molekulargewichtsregler n-Dodecylmercaptan von 0,1 auf 0,08 Gewichtsteile gesenkt. Der Abbruch der Polymerisation erfolgt bei 67 % Monomerumsatz. Die Mooney-Viskosität des Polymeren liegt bei ML-4' = 200 ME.

Beispiel 42

Man verfährt wie im Beispiel 41, nur werden bei 42 % Monomerumsatz 0,2 Gew.-Teile der Substanz G zugesetzt. Der Abbruch der Polymerisation erfolgt bei 68 % Monomerumsatz. Die Mooney-Viskosität des Polymeren liegt bei ML-4' = 164 ME.

Beispiel 43 (Lösungsviskosität)

Für die Bestimmung der Lösungsviskosität wurden 170 g des in den Beispielen 7 und 38-42 hergestellten Polychloroprens in 830 g eines Lösungsmittelgemisches aus Ethylenacetat, Benzin 65/95, Toluol (Gewichtsverhältnis 2 : 2 : 1) unter Rühren mit einem Laborrührer mit 600 UpM gelöst. Die so erhaltenen Klebstoffe wurden auf eine Viskosität von 3 Pas, gemessen bei 20 °C mit einem Brookfield LVT-Viskosimeter (Spindel 4, 30 UpM), durch Zugabe weiterer Mengen des gleichen Lösungsmittelgemisches verdünnt und in verschlossenen Gebinden bei 20 °C und 65 % relativer Luftfeuchtigkeit gelagert. Nach 6-monatiger Lagerung wurde ihre Viskosität erneut bestimmt.

| Polychloropren nach Beispiel | Lösungsviskotität (Pa s)+) sofort | nach 6-monatiger Lagerung |
|---|---|---|
| 7++) | 3,0 | 8,5 |
| 38 | 3,0 | 4,1 |
| 39 | 3,0 | 3,5 |
| 40 | 3,0 | 3,0 |
| 41++) | 3,0 | 12,0 |
| 42 | 3,0 | 5,0 |

+) gemessen bei 20 °C mit einem Brookfield LVT-Viskosimeter (Spindel 4, 30 UpM)
++) Vergleichsbeispiele

Beispiel 44 (Topfzeit)

1) 20 %ige Lösung von Thiophosphorsäure-tris-(p-isocyanatophenylester) in Methylenchlorid

25 g des in den Beispielen 7 und 38 bis 42 hergestellten Polychloroprens wurden in 125 g eines Lösungsmittelgemisches aus Ethylacetat, Benzin 65/95, Toluol (Gewichtsverhältnis 2 : 2 : 1) unter Rühren mit einem Laborrührer mit 600 UpM gelöst. Die so erhaltenen Klebstoffe wurden auf eine Viskosität von 1,5 Pas, gemessen bei 20 °C mit einem Brookfield LVT-Viskosimeter (Spindel 4, 30 UpM), durch Zugabe weiterer Mengen des gleichen Lösungsmittelgemisches verdünnt.

In dieser Lösung wurden 7,5 g Desmodur RF 1) gut eingemischt und die Viskosität dieser Klebstoffmischung mit einem Brookfield LVT-Viskosimeter (Spindel 4, bei 60 UpM) in 30 Sekunden bestimmt. Die Flasche wurde darauf bei 20 °C und 65 % relativer Luftfeuchtigkeit gelagert und der Viskositätsanstieg der Mischung durch stündliches Messen mit dem Brookfield LVT-Viskosimeter ermittelt, bis ein Anstieg der Ausgangsviskosität um 50 % erreicht wurde.

| Polychloropren nach Beispiel | Lösungsviskosität (Pa s) [+)] sofort | Viskositätsanstieg über 50 % nach (h) |
|---|---|---|
| 7[1)] | 1,2 | 24 |
| 38 | 1,2 | 40 |
| 39 | 1,2 | 45 |
| 40 | 1,2 | 48 |
| 41[1)] | 1,2 | 20 |
| 42 | 1,2 | 35 |

+) gemessen bei 20 °C mit einem Brookfield LVT-Viskosimeter (Spindel 4, 30 UpM)
1) Vergleichsbeispiele

Beispiele 44-48 (Lösungsviskosität)

Man verfährt wie im Beispiel 40, nur wird die Substanz G durch die Stoffe L bis P ersetzt, die beispielhaff für die in den allgemeinen Formeln Ia-Ie angegebenen Verbindungen stehen. Sie haben folgende Struktur :

L = S-(Cyclohexen-(3)-ylidenmethyl)-thioglykolsäureethylester
M = (Cyclohexen-(3)-ylidenmethyl)-4-isobutyl-phenylthioäther
N = (2,5-Endomethylen-cyclohexen-3-ylidenmethyl)-2-ethyl-hexyl-ether
O = 2-Methyl-5-acetyl-Oxa-cyclohexen-2
P = Cyclohexenyl-benzyl-ether

Die wesentlich verbesserten Produkteigenschaften sollen durch Bestimmung der Lösungsviskosität beispielhaft erläutert werden. Die Herstellung der Klebstoffmischungen aus Beispiel 44-48 erfolgt nach Beispiel 44-48 erfolgt nach Beispiel 43. Man erhält folgende Lösungsviskositäten :

| Polychloropren nach Beispiel | Substanz | Lösungsviskosität (Pa s) sofort | nach 6-monatiger Lagerung |
|---|---|---|---|
| 44 | L | 3,0 | 3,5 |
| 45 | M | 3,0 | 3,0 |
| 46 | N | 3,0 | 3,0 |
| 47 | O | 3,0 | 3,2 |
| 48 | P | 3,0 | 3,4 |

Wie man sieht, zeigen auch Polymere, die in Gegenwart von Stoffen der Struktur L-P hergestellt worden sind, ein deutlich verbessertes Lagerverhalten als ein Polymeres, das nach dem üblichen Polymerisationsverfahren hergestellt worden ist (Beispiel 7).

## Ansprüche

1. Verfahren zur Herstellung von hochmolekularem Polychloropren im Viskositätsbereich von 80-200 ME durch Polymerisation von Chloropren mit 0-20 Gewichtsprozent eines mit Chloropren copolymerisierbarem Comonomeren in wässriger Emulsion bei einer Temperatur von 0 bis 60 °C, bis zu einem Monomerumsatz von 50-96 % in Gegenwart eines Reglers, dadurch gekennzeichnet, daß man zum Reaktionsbeginn, während oder nach der Polymerisation, spätestens jedoch vor Entfernung der Restmonomeren, als zusätzlichen Regler eine Verbindung der allgemeinen Formel 1

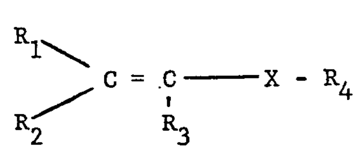
(1)

in Mengen von 0,05 bis 3 Gewichtsprozent, bezogen auf 100 Gewichtsteile Monomer, zugibt, in der

X O, S oder N-$R_5$

$R^1$ Wasserstoff, $C_1$-$C_{19}$-Alkyl, $C_2$-$C_{19}$-Alkenyl, Phenyl $C_1$-$C_4$ Alkylenphenyl, $C_5$-$C_{12}$-Cycloalkyl, $C_5C_{12}$-Cycloalkenyl,

$R_2$ $C_1$-$C_{19}$ Alkyl, $C_2$-$C_{12}$-Alkenyl, Phenyl $C_1$-$C_4$-Alkylenphenyl,

$R_3$ Wasserstoff, $C_1$-$C_{19}$ Alkyl, $C_2$-$C_{19}$ Alkenyl, Phenyl, $C_1$-$C_4$ Alkylenphenyl, Acryl, Formyl, Acetyl,

$R_4$ und $R_5$ gleich oder verschieden $C_1$-$C_{19}$ Alkyl, $C_2$-$C_{19}$ Alkenyl, Phenyl, $C_1$-$C_4$ Alkylenphenyl, Acryl, $C_5$-$C_{12}$ Cycloalkyl, $C_5$-$C_{12}$ Cycloalkenyl, wobei $R_4$ und $R_5$ auch einen Cyclus mit 4-7 C-Atomen bilden kann, der gegebenenfalls ein Sauerstoffatom in Ätherform enthalten kann,

bedeuten und die Reste $R_1$ und $R_2$ eine $C_5$-$C_{12}$-Alkylenbrücke oder $C_5$-$C_{12}$-Alkenylenbrücke, die Reste $R_1$ und $R_4$ eine $C_2$-$C_9$ Alkylenbrücke, sowie die Reste $R_1$ und $R_3$ eine $C_3$-$C_{10}$ Alkylenbrücke bilden können, wobei im Falle der Verknüpfung von $R_1$ und $R_2$ der entstehende Ring mit einer $C_1$-$C_4$ Alkylenbrücke überbrückt sein kann, und wobei die entstehenden Ringsysteme noch durch den Rest $R_6$ substituiert sind, der Wasserstoff, $C_1$-$C_5$ Alkyl oder $C_2$-$C_5$ Alkenyl darstellt.

2. Verfahren gemäß Anspruch 1, dadurch gekennzeichnet, daß bei einer Temperatur von 5 bis 45 °C polymerisiert wird.

3. Verfahren gemäß Anspruch 1 und 2, dadurch gekennzeichnet, daß bis zu einem Monomerumsatz von 70-90 % polymerisiert wird.

4. Verfahren gemäß Ansprüchen 1 bis 3, dadurch gekennzeichnet, daß Polymerisate mit einem Mooney-Viskositätsbereich von 130-170 ME erhalten werden.

5. Verfahren gemäß Ansprüchen 1-4, dadurch gekennzeichnet, daß die Verbindungen der Formel 1 vor Beginn der Polymerisation zugesetzt wird.

6. Verfahren gemäß Ansprüchen 1-4, dadurch gekennzeichnet, daß die Verbindungen der Formel 1 während der Polymerisation bis zu einem Monomerumsatz von 40 % zugesetzt werden.

7. Verfahren gemäß Ansprüchen 1-4, dadurch gekennzeichnet, daß die Verbindungen der Formel 1 nach Beendigung der Polymerisation vor dem Entfernen der Restmonomeren zugesetzt werden.

8. Verfahren gemäß Ansprüchen 1-7, dadurch gekennzeichnet, daß man eine Verbindung der allgemeinen Formel 2

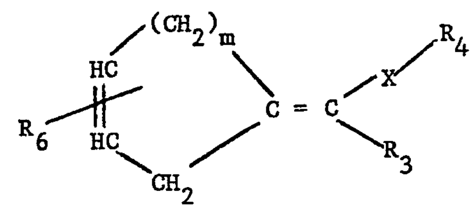

(2)

zugibt, in der m einen Zahlenwert von 1-8 darstellt und die Reste X, $R_3$, $R_4$ und $R_6$ die in Anspruch 1 angegebene Bedeutung besitzen.

9. Verfahren gemäß Ansprüchen 1-7, dadurch gekennzeichnet, daß man eine Verbindung der allgemeinen Formel 3

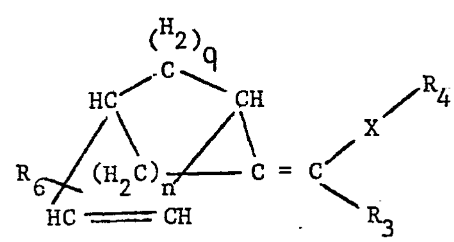

(3)

zugibt, in der

q den Zahlenwert 1-4,

n den Zahlenwert 1-7

darstellen und die Reste X, $R_3$, $R_4$ und $R_6$ die in Anspruch 1 angegebene Bedeutung besitzen.

10. Verwendung des nach Ansprüchen 1 bis 9 hergestellten Polychloroprens als Klebstoffrohstoff.

**Claims**

1. Process for the preparation of high molecular weight polychloroprene in the viscosity range corresponding to 80-200 monomer units, by polymerisation of chloroprene with 0-20 per cent by weight of a comonomer which is copolymerisable with chloroprene, in aqueous emulsion at a temperature from 0

to 60 °C, until a monomer conversion of 50-96 % is reached, in the presence of a regulator, characterised in that, at the beginning of the reaction, or during or after the polymerisation, but no later than the stage prior to removal of the residual monomers, a compound of the general formula

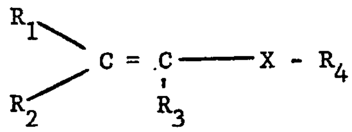

(1)

in which

X denotes O, S or N-$R_5$,

$R_1$ denotes hydrogen, $C_1$-$C_{19}$-alkyl, $C_2$-$C_{19}$-alkenyl, phenyl, $C_1$-$C_4$-alkylenephenyl, $C_5$-$C_{12}$-cycloalkyl or $C_5$-$C_{12}$-cycloalkenyl,

$R_2$ denotes $C_1$-$C_{19}$-alkyl, $C_2$-$C_{12}$-alkenyl, phenyl or $C_1$-$C_4$-alkylenephenyl,

$R_3$ denotes hydrogen, $C_1$-$C_{19}$-alkyl, $C_2$-$C_{19}$-alkenyl, phenyl, $C_1$-$C_4$-alkylenephenyl, acryl, formyl or acetyl,

$R_4$ and $R_5$ denote identical or different $C_1$-$C_{19}$-alkyl, $C_2$-$C_{19}$-alkenyl, phenyl, $C_1$-$C_4$-alkylenephenyl, acryl, $C_5$-$C_{12}$-cycloalkyl or $C_5$-$C_{12}$-cycloalkenyl, and $R_4$ and $R_5$ can also form a cyclic structure having 4-7 C atoms, which can contain an oxygen atom in ether form, and the radicals $R_1$ and $R_2$ can form a $C_5$-$C_{12}$-alkylene bridge or $C_5$-$C_{12}$-alkenylene bridge, the radicals $R_1$ and $R_4$ can form a $C_2$-$C_9$-alkylene bridge and the radicals $R_1$ and $R_3$ can form a $C_3$-$C_{10}$-alkylene bridge, and, if $R_1$ and $R_2$ are linked, the resulting ring can be bridged with a $C_1$-$C_4$-alkylene bridge, and the resulting ring systems are further substituted by the radical $R_6$ which represents hydrogen, $C_1$-$C_5$-alkyl or $C_2$-$C_5$-alkenyl,

is added, as an additional regulator, in amounts of 0.05 to 3 per cent by weight, relative to 100 parts by weight of monomer.

2. Process according to Claim 1, characterised in that polymerisation is carried out at a temperature from 5 to 45 °C.

3. Process according to Claims 1 and 2, characterised in that polymerisation is carried out until a monomer conversion of 70-90 % is reached.

4. Process according to Claims 1 to 3, characterised in that polymers having a Mooney viscosity range corresponding to 130-170 monomer units are obtained.

5. Process according to Claims 1-4, characterised in that the compounds of the formula 1 are added before the beginning of the polymerisation.

6. Process according to Claims 1-4, characterised in that the compounds of the formula 1 are added during the polymerisation, until a monomer conversion of 40 % is reached.

7. Process according to Claims 1-4, characterised in that the compounds of the formula 1 are added after polymerisation is complete and before removal of the residual monomers.

8. Process according to Claims 1-7, characterised in that a compound of a general formula

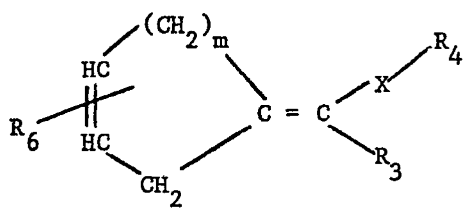

(2)

is added, in which m is a number from 1 to 8, and the radicals X, $R_3$, $R_4$ and $R_6$ have the meaning given in Claim 1.

9. Process according to Claims 1-7, characterised in that a compound of the general formula

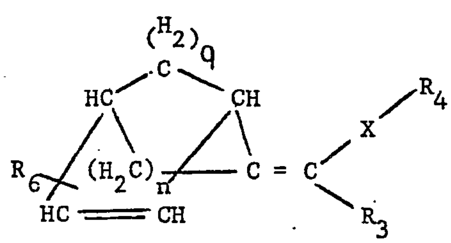

(3)

is added in which

q represents the number 1-4,

n represents the number 1-7,

and the radicals X, $R_3$, $R_4$ and $R_6$ have the meaning given in Claim 1.

10. Use of the polychloroprene prepared according to claims 1 to 9, as a raw material for adhesives.

**Revendications**

1. Procédé de préparation de polychloroprène à poids moléculaire élevé dont l'indice consistométrique se situe entre 80 et 200 ME, par polymérisation de chloroprène avec 0 à 20% en poids d'un comonomère, copolymérisable avec le chloroprène, en émulsion aqueuse à une température de 0 à 60 °C, jusqu'à un taux de réaction de monomère de 50 à 96% en présence d'un régulateur, procédé caractérisé en ce qu'on ajoute au début de la réaction, pendant ou après la polymérisation mais au plus tard avant l'enlèvement des monomères résiduels, comme régulateur supplémentaire, en des quantités de 0,05 à 3% en poids, pour 100 parties du monomère, un composé de formule générale

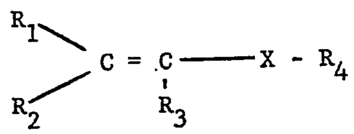

(1)

dans laquelle

X représente O, S ou N-$R_5$,

$R_1$ représente l'hydrogène, un groupe alkyle en $C_1$-$C_{19}$, alcényle en $C_2$-$C_{19}$, phényle, alkylènephényle en $C_1$-$C_4$ du groupe alkylène, cycloalkyle en $C_5$-$C_{12}$, cycloalcényle en $C_5$-$C_{12}$,

$R_2$ représente un groupe alkyle en $C_1$-$C_{19}$, alcényle en $C_2$-$C_{12}$, phényle, alkylènephényle (alkylène en $C_1$-$C_4$),

$R_3$ représente l'hydrogène, un groupe alkyle en $C_1$-$C_{19}$, alcényle en $C_2$-$C_{19}$, phényle, alkylènephényle (alkylène en $C_1$-$C_4$), acryle, formyle, acétyle,

$R_4$ et $R_5$, identiques ou différents, représentent chacun un groupe alkyle en $C_1$-$C_{19}$, alcényle en $C_2$-$C_{19}$, phényle, alkylènephényle (alkylène en $C_1$-$C_4$), acryle, cycloalkyle en $C_5$-$C_{12}$, cycloalcényle en $C_5$-$C_{12}$, $R_4$ et $R_5$ pouvant également former un cycle comportant 4 à 7 atomes de carbone qui peut éventuellement contenir un atome d'oxygène sous forme éther, et les radicaux $R_1$ et $R_2$ peuvent former un pont alkylène en $C_5$-$C_{12}$ ou un pont alcénylène en $C_5$-$C_{12}$, des radicaux $R_1$ et $R_4$ peuvent former un pont alkylène en $C_2$-$C_9$ et les radicaux $R_1$ et $R_3$ peuvent former un pont alkylène en $C_3$-$C_{10}$, et, en cas de liaison de $R_1$ et $R_2$, le cycle résultant peut être ponté par un pont alkylène en $C_1$-$C_4$, et les systèmes cycliques résultant peuvent encore être substitués par le radical $R_6$, qui représente l'hydrogène, un groupe alkyle en $C_1$-$C_5$, alcényle en $C_2$-$C_5$.

2. Procédé selon la revendication 1, caractérisé en ce qu'on polymérise à une température de 5 à 45 °C.

3. Procédé selon les revendications 1 et 2, caractérisé en ce qu'on polymérise jusqu'à un taux de réaction de monomère de 70 à 90%.

4. Procédé selon les revendications 1 à 3, caractérisé en ce qu'on obtient des polymères ayant un indice consistométrique Mooney situé dans un intervalle de 130 à 170 ME.

5. Procédé selon les revendications 1 à 4, caractérisé en ce qu'on ajoute les composés de formule I avant le début de la polymérisation.

6. Procédé selon les revendications 1 à 4, caractérisé en ce qu'on ajoute les composés de formule I pendant la polymérisation jusqu'à un taux de réaction de monomère de 40%.

7. Procédé selon les revendications 1 à 4, caractérisé en ce qu'on ajoute les composés de formule I après achèvement de la polymérisation mais avant enlèvement des monomères résiduels.

8. Procédé selon les revendications 1 à 7, caractérisé en ce qu'on ajoute un composé de formule générale

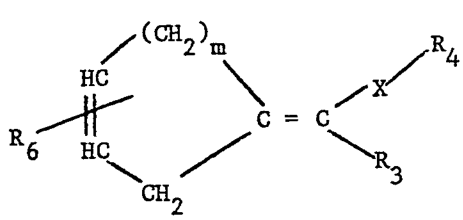

(2)

dans laquelle m est un nombre valant 1 à 8 et les radicaux X, $R_3$, $R_4$ et $R_6$ ont le sens indiqué à la revendication 1.

9. Procédé selon les revendications 1 à 7, caractérisé en ce qu'on ajoute un composé de formule générale

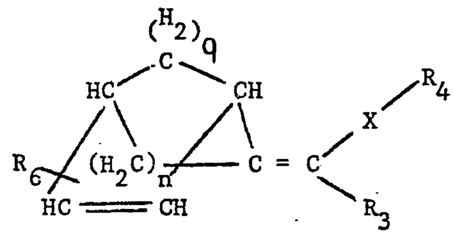

(3)

dans laquelle

q est un nombre valant 1 à 4,

n est un nombre valant 1 à 7,

et les radicaux X, $R_3$, $R_4$ et $R_6$ ont le sens indiqué à la revendication 1.

10. Utilisation du polychloroprène, préparé selon les revendications 1 à 9, comme matière première pour colle.